# EUROPEAN PATENT APPLICATION

(11) **EP 4 488 734 A1**
(43) Date of publication of application: **08.01.2025**
(21) Application number: 23382681.7
(22) Date of filing: 03.07.2023
(51) Int. Cl.: G02B 6/44

(54) **PROTECTION SYSTEM AND METHOD FOR A PRECONNECTORIZED FIBER OPTIC CABLE**

(71) Applicant: CABLES DE COMUNICACIONES ZARAGOZA, S.L., 50016 Zaragoza (ES)
(72) Inventor: SALOMÓN ZAPATA, Oscar, 50013 ZARAGOZA (ES); GARRIDO VICENTE, Luis Alberto, 50002 ZARAGOZA (ES)
(74) Representative: Ungria López, Javier

(57) **Abstract**

The present invention relates to a system and a method for the protection of a preconnectorized fiber optic cable (10), comprising: a fastening element (1) that can be coupled to a part of the cable in which all the layers have been removed except the inner sheath; a tubular protection element (3) that can be coupled at one end to the fastening element (1), wherein the tubular element (3) is configured to house the final part of the cable that comprises the connections of the optical fibers with the optical connectors, wherein this final part is also devoid of the inner sheath; and a closing element (2) that can be coupled to the other end of the tubular protection element (3).

## Description

### TECHNICAL FIELD OF THE INVENTION

The present invention relates to the technical field of optical communications, more specifically, to the protection methods and systems for preconnectorized fiber optic cables for their safe installation by means of pulling techniques.

### BACKGROUND OF THE INVENTION

Currently, fiber optic cables are supplied without end connections, meaning that the fiber optic connectors required to make the connection in the optical panels of a telecommunications system and/or local area networks are not provided installed on the cable; instead, the task of splicing the fiber optic cables with the connectors is fieldwork, on site, or by specialized personnel.

In a fiber optic system, connectors can be considered to be the weakest link, since it is one of the points most susceptible to signal loss. This sensitivity is one of the reasons why fiber optic cables are usually supplied without the connectors installed and to prevent breakage and uncoupling from occurring throughout the entire cable installation process (due to laying in channels, tubes or trenches), which would render them useless.

On the other hand, according to regular practice, the installation of fiber optic cables is usually carried out by blowing into pipes or laying directly on trenches or ducts. Therefore, some element is required for the installation process that adapts to the cable and that allows the cable to be pulled without said cable suffering damage or breaking. This fiber optic cable installation process begins by placing said cable along the dedicated receivers (such as corresponding channels, tubes or trenches), so that the cable is then pulled strongly. To pull the cable, a pulling assembly that is separated from the cable is typically supplied, which usually consists of a spiral-shaped metal part that can be adapted to the cable and that allows it to be pulled without breaking. Alternatively, on other occasions, additional parts are not required and tensile elements (aramid yarns) that are part of the cable itself are pulled directly.

Once the cable has been installed in the definitive location, the connectors are placed on the corresponding optical fibers in the field, which will eventually be connected to the telecommunications system. To join the cable to the connectors, the process consists of stripping the cable and making the connection with the connector on the bare optical fibers. In this process, however, insertion losses may occur, since field conditions are more likely to be exposed to dust or other polluting agents that reduce the performance of the connections. Furthermore, this operation entails a high economic cost since highly-skilled labor and equipment must be used.

Therefore, the state of the art lacks precise solutions that guarantee the reliability of the preconnectorized cables after the installation process and thus overcome the vulnerability and high specialization required for field installation.

### DESCRIPTION OF THE INVENTION

The present invention solves the aforementioned problems by means of a protection system for preconnectorized fiber optic cables that comprise an outer sheath and an inner sheath, wherein said system comprises:
- a fastening element that can be coupled to the fiber optic cable in a first part of the cable devoid of the outer sheath;
- a tubular protection element that can be coupled at a first end to the fastening element, wherein the tubular element is configured to house therein a final part of the cable that comprises at least one preconnectorized optical fiber, wherein the final part is devoid of the outer sheath and the inner sheath; and
- a closing element that can be coupled to a second end of the tubular protection element.

According to one of the embodiments of the invention, the fastening element is provided with a threaded through hole, configured to couple to a threaded portion of the first sheath in the first part of the cable. Specifically, it is considered that the threaded through hole of the fastening element comprises a first diameter in a first section configured to join the tubular protection element and a second diameter in a second section configured to join the cable. Thus, advantageously, the fastening element can be implemented with different bores for its joining with the tubular protection element.

The tubular protection element, according to one of the embodiments of the invention, consists of a hollow cylindrical body with surface threading, configured to join the threaded through hole of the fastening element.

In one of the embodiments of the invention, the fastening element comprises three pieces: a pair of symmetrical semi-cylindrical hollow bodies, wherein the joining of both bodies defines a through hole therein, configured to be passed through by the first part of the cable, and on the outside, said joining defines a threaded cylindrical body and a stop, and an internally threaded tubular body configured to join on the threaded cylindrical body defined by the joining of the pair of hollow bodies. Thus, advantageously, the coupling and tightening of the fastening element is facilitated.

In one of the embodiments of the invention, one of the pairs of symmetrical semi-cylindrical hollow bodies comprises a flange-shaped extension to receive a female joint in a tongue-and-groove configuration.

Additionally, one of the embodiments comprises an outer casing configured to couple, at one of its ends, to the outer sheath of the cable and, at the opposite end, to the tubular protection element, so that in the mounting position the casing completely covers the fastening element and a portion of the tubular protection element. Specifically, one of the particular embodiments of the outer casing comprises: a first piece, configured to couple to the outer sheath of the cable by screwing; an elongated hollow body, configured to join by screwing onto the first piece; and a closing piece, configured to snap fit between the protection element and the inner surface of the elongated hollow body.

The closing element, according to one of the embodiments of the invention, is the same as the fastening element. Thus, advantageously, the manufacture of the same single part is used, and the through hole allows for the additional use of the aramid yarns of the inner sheath. Alternatively, the closing element is a plug with a blind hole that provides better insulation of the protection assembly.

According to one of the embodiments of the invention, the tubular protection element is a flexible metal tube, such as a corrugated sleeve. Thus, advantageously, the connections that are housed therein are sufficiently protected against blows and pulling actions, while the final portion of the cable has certain flexibility to adapt to possible curves in its installation path.

Additionally, in one of the embodiments of the invention, the protection system comprises a holding strip that can be inserted along the element of the tubular protection element, wherein the strip has an arrangement of cells distributed every certain distance along said strip, wherein the cells are configured to house the connectors of the preconnectorized fibers. In one of the embodiments of the invention, the holding strip has a tongue-and-groove configuration at its ends that allows several strips to be joined.

According to one of the embodiments of the invention, in an arrangement of the system coupled to the fiber optic cable, an outer sheath made of heat-shrinkable material is also considered for the entire assembly formed by the fastening element, the tubular protection element and the closing element. Thus, the tubular protection element is advantageously protected from the entry of dust or water and, in the event that the aramid yarns or other reinforcing element of the cable are arranged surrounding the assembly, they will also be protected and bundled.

In one of the embodiments of the invention, a pulling element is also considered, wherein the pulling element is joined to one or more reinforcing elements of the cable. Specifically, in one of the embodiments of the invention, the pulling element is a double-eye swivel-type hook or the like.

A second aspect of the invention relates to a protection method for a preconnectorized fiber optic cable, with a multilayer structure comprising at least one outer sheath and one inner sheath that houses the preconnectorized optical fibers, wherein the method comprises:
- removing the layers of a final part of the cable until reaching the inner sheath, except for the aramid yarns;
- removing the inner sheath of the final part of the cable, except for an initial portion of said final part;
- coupling a fastening element to the cable in the initial portion of the final part;
- coupling a tubular protection element to the fastening element, such that the tubular element houses therein an end of the cable that comprises at least one preconnectorized optical fiber;
- coupling a closing element at a free end of the tubular protection element.

Additionally, according to one of the embodiments of the invention, the step of removing the layers of the final part of the cable further comprises: preserving reinforcing yarns of the cable and joining, at one end of the reinforcing yarns, a pulling element. Thus, advantageously, the assembly is ready for installation simply by hooking the pulling assembly.

Additionally, in one of the embodiments of the invention, coupling an outer casing from the outer sheath to the tubular protection element is considered, such that said casing houses the fastening element and a portion of the tubular protection element therein. Thus, advantageously, a greater degree of protection is offered at one of the weakest points of the cable, such as the exposed part between the outer sheath and the fastening element.

The present invention considers arranging a sheath made of heat-shrinkable material on a part that extends from the closing element to the outer sheath of the cable, such that said sheath covers all the elements arranged in said part. Thus, advantageously, the entire assembly is protected from splashes and dust, as well as offering a visual guarantee, by way of a seal, that the cable has not been tampered with.

Optionally, the present invention considers that, before coupling the tubular protection element, the optical connectors of the preconnectorized fibers are housed in cells arranged every certain distance along a holding strip. Thus, advantageously, the connectors are held in a linear arrangement for better organization and preservation of the same.

According to all of the above, the present invention provides preconnectorized optic cables with an advantageous configuration that allows them to be protected during installation, which can be done according to the usual procedure of pulling them with force, without the connectors suffering or becoming uncoupled. Thus, once the cable has been installed, the connectors can be connected to the telecommunications system easily, quickly and efficiently, without requiring highly specialized personnel or equipment.

### BRIEF DESCRIPTION OF THE FIGURES

To make this specification more readily understandable, and forming an integral part thereof, a series of figures in which the object of the invention has been represented in an illustrative and non-limiting manner are attached below.
**Figure 1** shows an embodiment of the protection system of the present invention in a coupling position on the portion of the inner sheath of a preconnectorized fiber optic cable (10).
**Figure 2** shows an embodiment of the fastening element.
**Figures 3-5** show a detailed view of the joining between an embodiment of the fastening element and the cable.
**Figure 6** shows a detailed view of an embodiment of the holding strip.
**Figure 7** shows a holding strip like the one in figure 6, but with an additional lid element for the cells.
**Figure 8** shows a front view of an embodiment of the holding strip with details of its possible tongue-and-groove joining.
**Figure 9** shows a rear view of an embodiment of the holding strip with details of its possible tongue-and-groove joining.
**Figure 10** shows the protection system of the present invention coupled to the preconnectorized fiber optic cable, with details of the reinforcing elements arranged surrounding the protection assembly and joined to a pulling element.
**Figure 11** shows a final state of the invention, with a heat-shrinkable sheath that covers the entire assembly, except for the joining of the end of the reinforcement elements to the pulling element.
**Figure 12** shows a section of a typical cable to which the present invention is applied.
**Figure 13** shows a perspective view of a typical cable to which the present invention is applied, with details of its inner layers.
**Figure 14** shows a longitudinal section of an embodiment of the present invention with details of an outer casing that covers the main protection assembly.
**Figure 15** shows a perspective view of the complete outer casing represented in figure 14.
**Figure 16** shows an embodiment of the fastening part, with details of the joining flange for the holding strips.

### DETAILED DESCRIPTION OF THE INVENTION

The present invention relates to a protection system for preconnectorized cables that can be installed in the usual manner and that allows a quick connection to the telecommunications system.

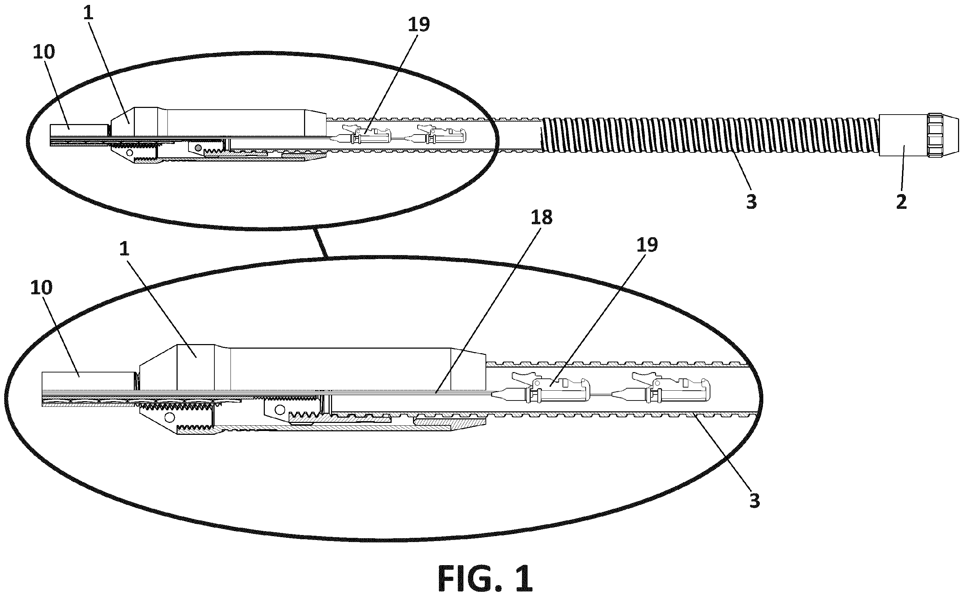

**Figure 1** shows an embodiment of the protection system of the present invention in a coupling position on the first sheath of the final part of a preconnectorized fiber optic cable **10**. This basic protection assembly consists of a fastening piece **1**, a closing piece **2** and a protection tube **3**, which is preferably made of flexible metal material, intended to house therein the ends of the optical fibers **18** of the cable **10**, already connected to the connectors **19** (for example, E2000-type connectors), preferably mounted on a holding strip (not shown in the figure).

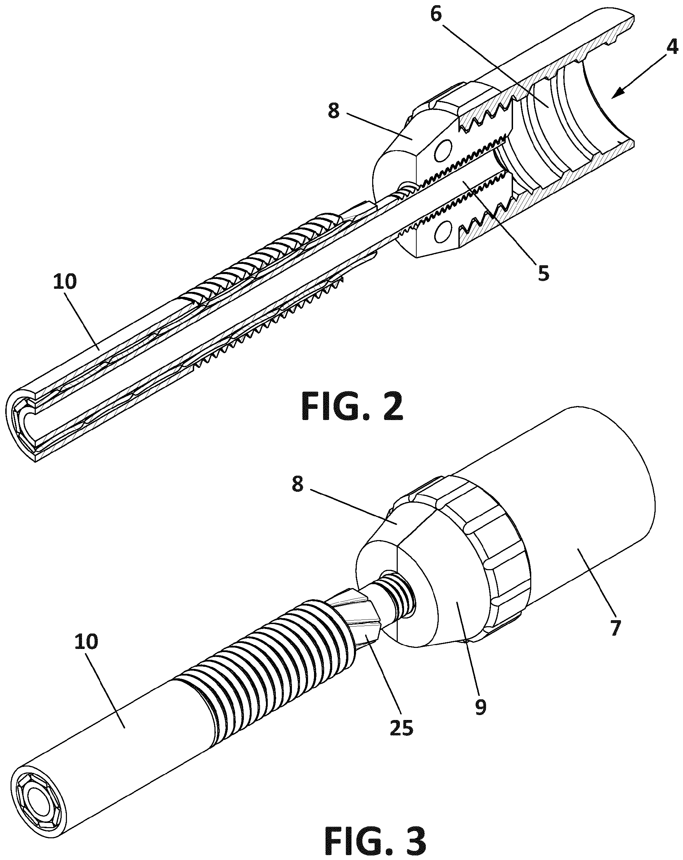

**Figure 2** shows the fastening piece **1.** It consists of a plastic material, preferably ABS recycled material, with a threaded through hole **4** therein, with different thread pitches to provide the joining between the fiber optic cable **10** and the protection tube **3** through a first section **5** and a second section **6** of different diameters, wherein the second section **6** can be provided in different bores to accommodate the optical connections or connectors.

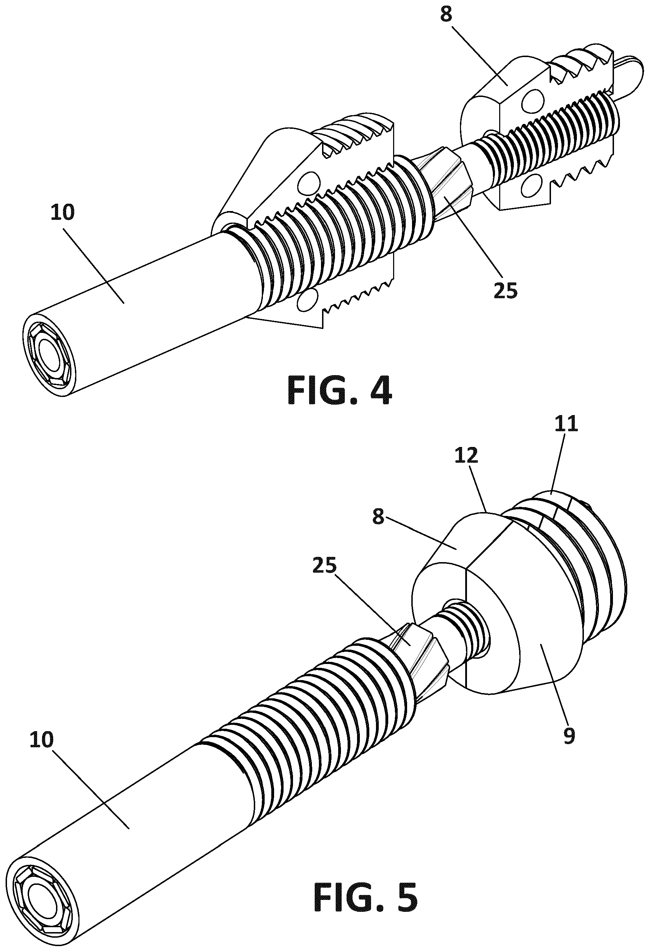

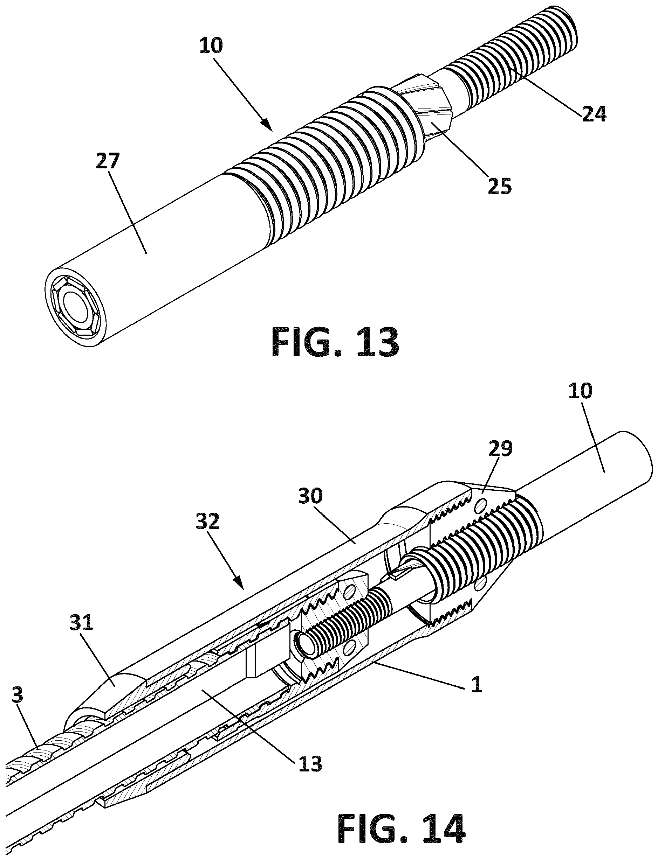

**Figures 3-5** show a detailed view of an embodiment of the fastening piece **1**, which is formed in turn by three part, a first tubular-shaped part **7**, a second part **8** and a third part **9**, the second and third parts being symmetrical halves. Thus, the second part **8** and the third part **9** are a pair of semi-cylindrical hollow bodies, wherein the joining of both bodies defines the first section **5** of the through hole **4** therein. Externally, the joining of both bodies defines a stop **12** and a superficially threaded cylindrical body **11,** which corresponds to the inner threading of the first tubular-shaped part **7** and allows the joining of the assembly, resulting in stable and removable fastening. It is the same configuration that, on a larger scale, is used in other embodiments such as those of **figures 14-16** to add an additional outer casing **32** (in **figure 4** one of the symmetrical halves of this outer casing is included as only an example). This design of the fastening part **1** allows its placement and subsequent removal on the cable **10** in a quick and efficient manner. The second part **8** and third part **9** are arranged on the cable, embracing a portion in which only the first sheath of the cable is maintained, such that when screwing the first part **7** on them, the complete assembly is retained and fastened to the cable. Subsequently, the protection tube **3** is screwed on the first tubular-shaped portion **7** of the fastening piece **1**.

Similarly, the closing piece **2** is screwed on the free end of the protection tube **3** once the optical fibers have been introduced through the tube and said tube is coupled to the fastening piece **1**. This closing piece **2** can have the same configuration as the fastening piece **1** and thus use the same elements, although the particularity of being placed at the free end of the cable (unlike the fastening piece **1**, which is an intermediate element) makes its placement easier. Therefore, the same functionality is also achieved by manufacturing the closing piece **2** in one single part or in two parts, instead of having two symmetrical halves. In this configuration that is identical to the fastening piece **1** (regardless of whether it is manufactured in one, two or three parts), the closing element **2** comprises a through hole that facilitates the exit of inner reinforcing elements (aramid yarns) of the cable, for additional joining to a pull element as described later.

Alternatively, the manufacture of the closing element **2** can vary with respect to the fastening piece **1** to provide a blind bottom. Thus, the protection system exhibits greater protection against the passage of water through the metal tube.

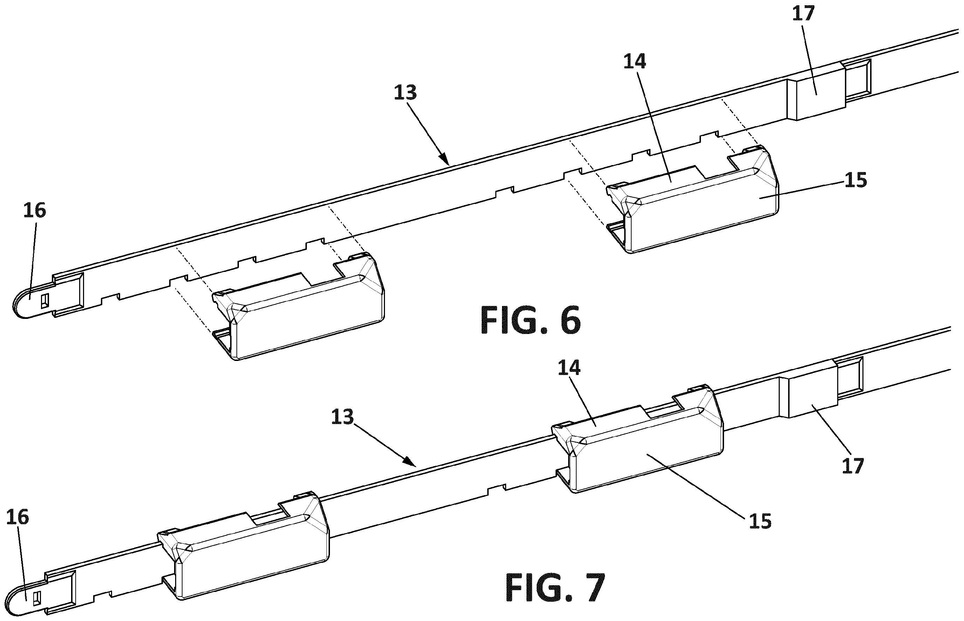

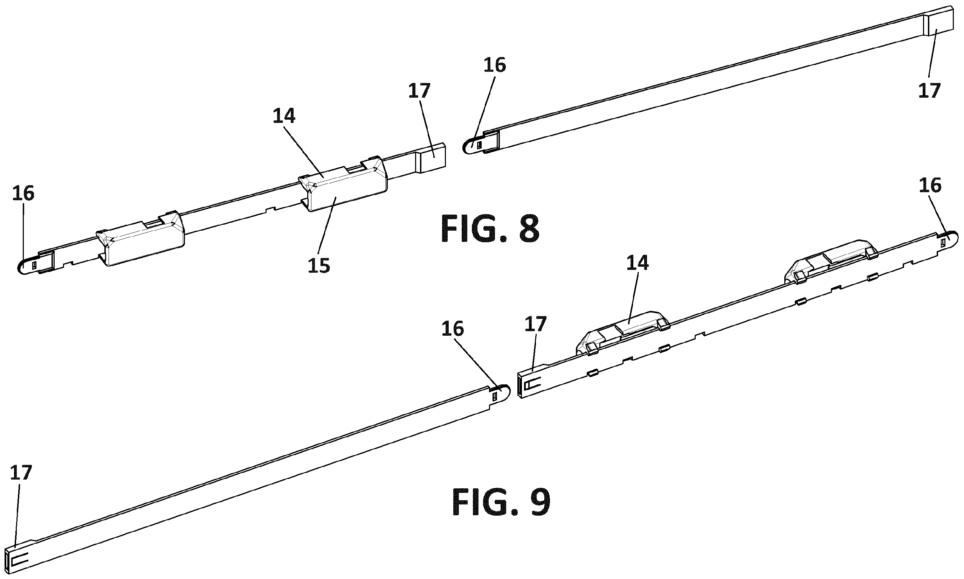

**Figures 6-9** represent a holding strip **13** which is included in one of the embodiments of the invention. The holding strip **13** of connectors has, every certain distance, cells **14** into which the connectors **19** of the preconnectorized optical fibers **18** are hooked. In this way, the connectors **19** that end said optical fibers **18** contained in the cable **10** are organized staggered in a line, one after the other, with a separation of a few centimeters, preferably not less than 3 cm. Additionally, each cell **14** can have a lid **15,** shown in **figure 7**, which provides greater protection to the connector. The design of the holding strip **13** allows each terminal connector **19** of the optical fibers **18** to be held in such a way that they are not disconnected or damaged in the installation of the cable **10**. The holding strip **13** can be manufactured in one single piece, adding as many cells **14** as necessary, or they can be manufactured with fixed dimensions and have tongue-and-groove joints, with a male joint **16** and a female joint **17**, at their ends to be able to join the strips, as can be seen in **figure 8** and with details of the back of the strips in **figure 9**.

Once the connectors **19** have been placed in the cells **14** of the strip **13**, one of the embodiments contemplates providing an additional barrier by means of a tubular plastic protection, for example, a plastic sheath with a tubular polyethylene roll of gauge 300. In this case, the entire assembly of connectors with said plastic protection is inserted into the flexible metal tube and, later, it is closed by screwing the closing element **2**.

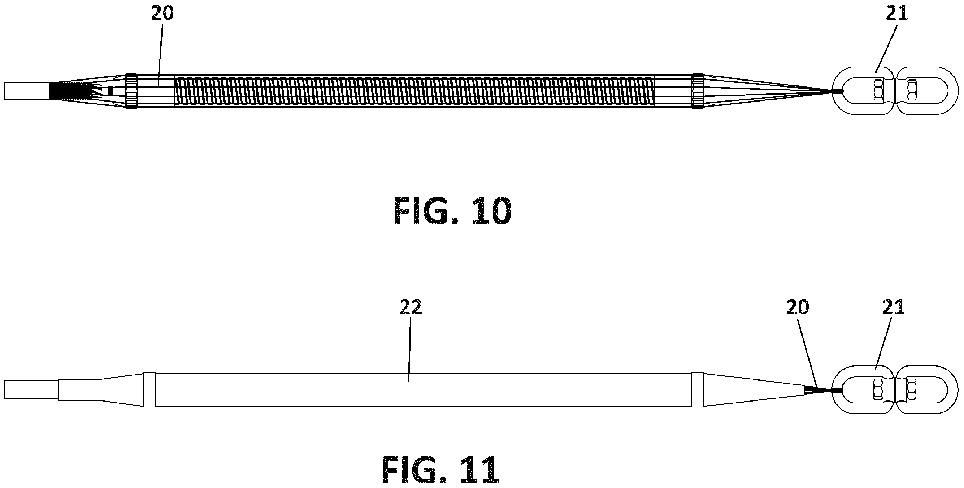

**Figure 10** shows the protection system of the present invention coupled to the preconnectorized fiber optic cable, with details of reinforcing elements **20**, specifically aramid yarns, normally present under the outer sheath of the fiber optic cables. Thus, when removing the outer layers of the cable to couple the protection system of the present invention, the yarns of the cable are preserved to be subsequently arranged wrapping around the protection system and, at its end, joining them to a pulling element **21**, specifically a double-eye swivel hook.

**Figure 11** shows a final state of the invention, wherein a heat-shrinkable sheath **22**, preferably made of halogen-free polyolefin, is applied on the reinforcing elements already held to the pulling assembly **21**, said sheath covering the entire assembly and protecting it from dust, water and undue tampering with the fastening piece **1** and the closing piece **2**. The sheath **22** also functions as a guarantee seal, since as long as it appears unaltered, it can be guaranteed that the components therein have not been tampered with since it was manufactured.

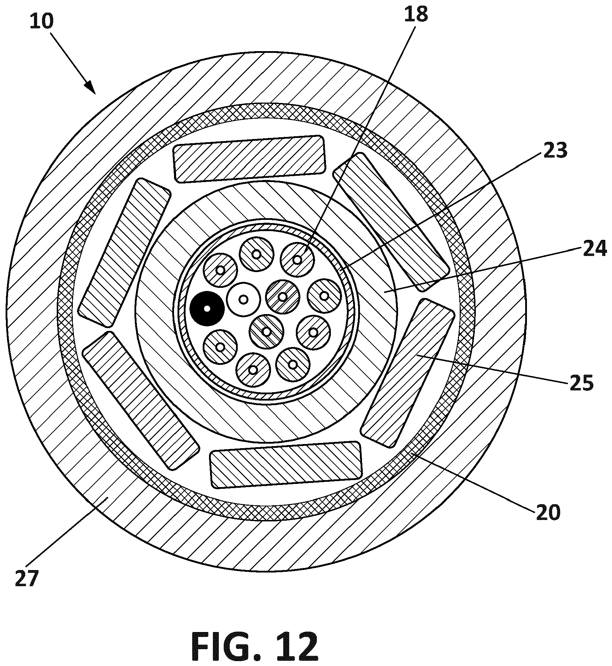

**Figures 12** and **13** show an example of a typical cable to which the protection method and system of the present invention is applied. The section of the multilayer fiber optic cable **10** comprises, starting from the core outwards, a set of optical fibers **18**, for example, twelve tight buffer optical fibers of 900 microns, wherein said protection is made with a fire-resistant low smoke zero halogen (LSZH) plastic material. Surrounding the set of fibers, a layer of inner reinforcing elements **23**, usually aramid yarns, adhered to the inner surface of an inner sheath **24** is arranged in a loose tube configuration. On said loose tube is an anti-rodent protection layer **25** consisting of a frame of reinforced fiberglass elements, flat and placed in a helix. On this frame is a layer of outer reinforcing elements **20**, usually aramid yarns, that provide tensile strength and, on all the previous layers is a final layer consisting of a high-density polyethylene outer sheath **27**.

The method of the present invention for the protection of a preconnectorized fiber optic cable follows the procedure described below for a particular embodiment on a cable with up to twelve fibers and a multilayer structure such as the one described in **figure 12**. Approximately two meters are removed from the outer sheath **27**. The reinforcing elements **20**, aramid yarns, are removed but they are properly collected for later use, avoiding excessive cutting or handling. The anti-rodent protection **25** is removed such that the inner sheath **24** of the cable is exposed. Most of the inner sheath **24** is removed from the cable that has been exposed, leaving only a certain length unremoved, for example, in this case, around 10 cm. On this small portion of the inner sheath that remains, there is a thread with a length of, for example, 2.5 cm, although all the indicated lengths are for illustrative purposes, since they can vary mainly according to the number of optical fibers contained in the cable to be protected and a greater or lesser length of the protection tube and coupling force of the fastening piece is required. The fastening piece **1**, at least the first tubular-shaped portion **7**, is then placed. Then the connectorization of the fibers **18** with optical connectors **19** is carried out. This connectorization is carried out pursuing a linear and staggered distribution of the connectors, so that they are arranged in a line one after the other with a separation of no less than 3 cm. The distribution can be carried out directly by managing different lengths for the terminations of the optical fibers or it can be guided by a holding strip **13** with cells **14** prepared to house and hold the connectors **19**. Once the connections have been made, they are protected by means of a tubular plastic protection. The set of connectors with said plastic protection and the reinforcing elements of the inner cable are inserted into a flexible metal tube until coupling, by screwing, said flexible metal tube to the fastening piece **1** that had already been placed. The free end of the flexible metal tube receives a closing element, which can be identical to the fastening piece or choosing a closing element with a blind bottom for greater protection. With the tube closed at both ends, the reinforcing elements **20**, usually aramid yarns, that had been exposed by removing the outer sheath **27** of the cable are recovered and are used to surround the entire protection assembly formed by the fastening piece **1**, the protection tube **3** and the closing piece **2**, until joining the reinforcing elements **20** by their free end and holding them to a pulling element **21**. Finally, once the yarns are held to the pulling assembly, they will be protected by a heat-shrinkable polyolefin sheath/tube **22**.

The cables protected according to the system and the method described by the present invention can be installed by the usual pulling techniques without the risk of the connections (fiber-optical connector) being damaged or disconnected by pulling strongly on the cable. Once the cable is installed in its final location, for the operator to connect the optical connectors to the telecommunications system, they must proceed to remove the heat-shrinkable sheath **22**, unscrew the closing element **2** and remove the protection tube **3**. After these steps, the operator now has access to the optical fibers **18** with connectors **19**, which can be free or hooked to a holding strip **13**. In the event that a holding strip **13** has been used for the distribution and holding of the connectors **19**, the operator unhooks the connectors **19** from the corresponding cells **14** and can now make the connection to the telecommunications system.

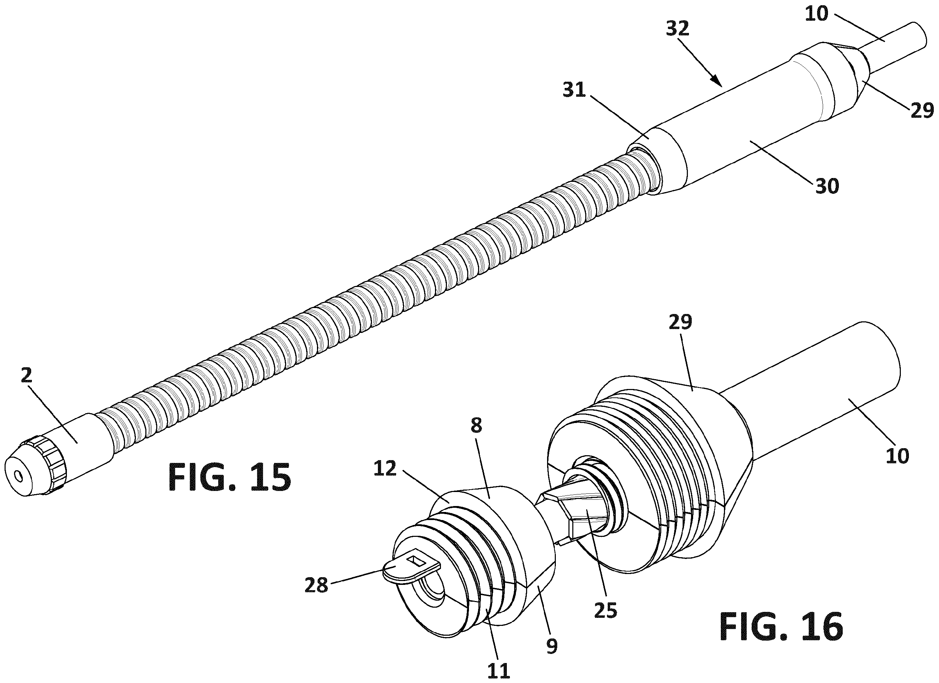

**Figures 14** and **15** show an embodiment of the present invention in which there is an outer casing **32** on the main protection assembly. Thus, an additional degree of protection is achieved on the area of the cable defined between the fastening piece **1** and the outer sheath of the cable. The configuration of this outer casing **32** is very similar to that of the fastening piece **1** and the protection tube **3**, but scaled to a larger bore to allow its coupling on the outer sheath of the cable and to be able to precisely house the fastening piece **1** therein. The outer casing **32** is a substantially cylindrical element that comprises a first part **29**, configured to couple to the outer sheath of the cable **10** by screwing, an elongated hollow body **30**, configured to screw on the first part **29** of the casing **32** and cover the distance between the outer sheath and the fastening piece **1**, and finally a closing part **31**, configured to snap fit between the protection tube and the inner surface of the elongated hollow body **30**. Thus, the set of pieces (**29, 30, 31**) that make up the outer casing **32** form a through hole with different bores to adapt to the different sizes and parts to be housed therein.

The first part **29** is preferably divided into two symmetrical halves to facilitate coupling and uncoupling in the threading of the outer sheath without having to pass the entire portion of cable that goes from the end through a through hole. It has an identical configuration to the fastening piece **1** shown in **figures 3-5**, with the difference that a larger bore is provided to adapt to the dimensions of the outer sheath.

In the case of the embodiments that add the outer casing **32** of **figures 14** and **15**, the described procedure also requires some additional steps, as is evident. In addition to the steps already described, it is necessary to make a thread on the outer sheath, for example, of approximately 2.5 cm, wherein the first part **29** of the casing **32** will subsequently be joined. Approximately two meters of the outer sheath is removed from the end of the threading. Once all the elements have been placed, except for the heat-shrinkable polyolefin sheath/tube **22**, the outer casing **32** is placed, first screwing the first part **29** on the threading of the outer sheath of the cable, then coupling the elongated hollow body **30**, and then adding the closing part **31.** The aramid yarns do not change their arrangement, since they run surrounding the main protection assembly (fastening element **1** and tubular protection element **3**) in the same way as in the embodiments without an outer casing **32**. In other words, the casing **32** is coupled to the tubular protection element **3** but with enough clearance to allow the aramid yarns to pass. Finally, the assembly is covered by a heat-shrinkable polyolefin sheath/tube **22**, in the same way as in the embodiment without a casing.

For the cable installation operations by an operator at the final location, the procedure of the embodiment with an outer casing **32** only involves the additional steps of, once the heat-shrinkable sheath **22** has been removed, first removing the closing part, unscrewing the elongated hollow body **30**, and finally removing the first part **29**, taking advantage of its configuration in two symmetrical halves. Once the casing has been completely removed, the following steps are identical to the embodiment without a casing.

**Figure 16** shows a variation of the fastening piece **1** shown in **figures 3-5****,** wherein one of the two symmetrical halves comprises a flange-shaped extension **28**, configured to serve as a junction point to the holding strip **13**, facilitating the tongue-and-groove joint with the female joint **17** of the strip **13**. This configuration is advantageous in that it provides greater fastening for the holding strip **13**, since it remains integral with the protection system assembly by means of the tongue-and-groove joint to the fastening piece **1**.

The present invention is applied to fiber optic cables for the optical connection between devices in a local area network, by laying the cable by the pulling technique in ducts, prefabricated channels or directly on trenches.

## Claims

1. A protection system for a preconnectorized fiber optic cable (10) comprising an outer sheath (27) and an inner sheath (24), wherein said system is **characterized in that** it comprises the following elements:
- a fastening element (1) that can be coupled to the fiber optic cable (10) in a first part of the cable devoid of the outer sheath (27);
- a tubular protection element (3) that can be coupled at a first end to the fastening element (1), where the tubular element is configured to house therein a final part of the cable that comprises at least one preconnectorized optical fiber, wherein the final part is devoid of the outer sheath and the inner sheath; and
- a closing element (2) that can be coupled to a second end of the tubular protection element (3).

2. The system according to claim 1, wherein the fastening element (1) comprises a threaded through hole, configured to couple to a threaded portion of the first sheath in the first part of the cable.

3. The system according to claim 2, wherein the threaded through hole of the fastening element comprises a first diameter in a first section configured to join the tubular protection element (3) and a second diameter in a second section configured to join the cable (10).

4. The system according to any of claims 2-3, wherein the tubular protection element (3) is a hollow cylindrical body with surface threading, configured to join the threaded through hole of the fastening element (1).

5. The system according to any of the preceding claims, wherein the fastening element (1) comprises three pieces:
- a pair of symmetrical semi-cylindrical hollow bodies (8, 9), wherein the joining of both bodies defines a through hole therein, configured to be passed through by the first part of the cable, and on the outside, said joining defines a threaded cylindrical body (11) and a stop (12); and
- an internally threaded tubular body (7) configured to join on the threaded cylindrical body (11) defined by the joining of the pair of hollow bodies (8, 9).

6. The system according to claim 5, wherein one of the pairs of symmetrical semi-cylindrical hollow bodies (8, 9) comprises a flange-shaped extension (28) to receive a female joint in a tongue-and-groove configuration.

7. The system according to any of the preceding claims, further comprising an outer casing (32) configured to couple, at one of its ends, to the outer sheath of the cable (10) and, at the opposite end, to the tubular protection element (3), so that in the mounting position the casing completely covers the fastening element (1) and a portion of the tubular protection element (3).

8. The system according to claim 7, wherein the outer casing (32) is a substantially cylindrical element that is made up of the following pieces:
- a first piece (29), configured to couple to the outer sheath of the cable (10) by screwing;
- an elongated hollow body (30), configured to join by screwing onto the first piece (29); and
- a closing piece (31), configured to snap fit between the protection element (3) and the inner surface of the elongated hollow body (30).

9. The system according to any of the preceding claims, further comprising a holding strip (13) that can be inserted along the element of the tubular protection element (3),
wherein the strip has an arrangement of cells (14) every certain distance along said strip, wherein the cells are configured to distribute the connectors of the preconnectorized fibers in a staggered manner.

10. The system according to claim 9, wherein the holding strip comprises a tongue-and-groove configuration (16, 17) at its ends that allows several strips to be joined.

11. The system according to any of the preceding claims, wherein, in an arrangement coupled to the fiber optic cable, it further comprises an outer coating made of heat-shrinkable material (22) for the assembly formed by the fastening element, the tubular protection element and the closing element.

12. The system according to any of the preceding claims, further comprising a pulling element (21), wherein the pulling element is joined to one or more reinforcing elements (20) of the cable.

13. A protection method for a preconnectorized fiber optic cable (10), with a multilayer structure comprising at least one outer sheath (27) and one inner sheath (24) that houses optical fibers (18), wherein the method is **characterized in that** comprises the following steps:
- removing the layers of a final part of the cable (10), except for some reinforcing yarns (20), until reaching the inner sheath (24);
- removing the inner sheath of the final part of the cable, except for an initial portion of said final part;
- coupling a fastening element (1) to the cable in the initial portion of the final part;
- connecting at least one optical connector (19) to one of the optical fibers (18);
- coupling a tubular protection element (3) to the fastening element (1), such that the tubular element houses therein the connection of the optical fiber (18) with the optical connector (19); and
- coupling a closing element (2) at a free end of the tubular protection element (3).

14. The method according to claim 13, further comprising coupling an outer casing (32) from the outer sheath to the tubular protection element (3), such that said casing houses the fastening element (1) and a portion of the tubular protection element (3) therein.

15. The method according to any of claims 13-14, further comprising arranging a sheath made of heat-shrinkable material (22) on a section that extends from the closing element (2) to the outer sheath of the cable, such that said sheath covers all the elements arranged in said section.
